# EUROPEAN PATENT APPLICATION

(11) **EP 4 579 704 A2**
(43) Date of publication of application: **02.07.2025**
(21) Application number: 24218017.2
(22) Date of filing: 06.12.2024
(51) Int. Cl.: H01G 4/12, H01G 4/224, H01G 4/232, H01G 4/30

(54) **LARGER DIELECTRIC GRAIN SIZE IN THE TOP COVER LAYER THAN IN THE BOTTOM COVER LAYER OF A MULTILAYER ELECTRONIC COMPONENT**

(30) Priority: 27.12.2023 KR 20230192889
(71) Applicant: Samsung Electro-Mechanics Co., Ltd., Gyeonggi-do (KR)
(72) Inventor: Kim, Yun, Suwon-si, Gyeonggi-do (KR); Cho, Joon Yeob, Suwon-si, Gyeonggi-do (KR); Ahn, Young Ghyu, Suwon-si, Gyeonggi-do (KR); Choi, Jea Yeol, Suwon-si, Gyeonggi-do (KR)
(74) Representative: Grünecker Patent- und Rechtsanwälte PartG mbB

(57) **Abstract**

A multilayer electronic component (100), comprising:

a capacitance formation portion (Ac) including a dielectric layer (111) and first and second internal electrodes (121, 122) alternately arranged in a first direction (T) with the dielectric layer (111) interposed therebetween;

a first cover portion (112) disposed above the capacitance formation (Ac) portion in the first direction (T);

a second cover portion (113) disposed below the capacitance formation portion (Ac) in the first direction (T);

a body (110) including first and second surfaces (1, 2) opposing each other in the first direction (T), third and fourth surfaces (3, 4) connected to the first and second surfaces (1, 2) and opposing each other in a second direction (L), and fifth and sixth surfaces (5, 6) connected to the first to fourth surfaces (1, 4) and opposing each other in a third direction (W); and

first and second external electrodes (131, 132) disposed on the body (110) and respectively connected to the first and second internal electrodes (121, 122),

wherein corners of the body (110) in first and second directional cross-sections of the body (110) have a rounded shape, and when

- a radius of curvature of a corner disposed in the first cover portion (112) is defined as (Ru), and

- a radius of curvature of a corner disposed in the second cover portion (113) is defined as Rd,

Rd < Ru is satisfied and 0.70 < Rd/Ru < 1.00 is satisfied, and when

- an average size of dielectric grains included in the first cover portion (112) is defined as Gs1 and

- an average size of dielectric grains included in the second cover portion (113) is defined as Gs2,

Gs2 < Gs1 is satisfied and 0.70 < Gs2/Gs1 < 1.00 is satisfied.

## Description

### CROSS-REFERENCE TO RELATED APPLICATION(S)

This application claims the benefit of priority to Korean Patent Application No. 10-2023-0192889 filed on December 27, 2023, in the Korean Intellectual Property Office, the disclosure of which is incorporated herein by reference in its entirety.

### TECHNICAL FIELD

The present disclosure relates to a multilayer electronic component.

### BACKGROUND

A multilayer ceramic capacitor (MLCC), a multilayer electronic component, is a chip-type condenser, mounted on the printed circuit boards of various types of electronic product, such as image display devices including a liquid crystal display (LCD) and a plasma display panel (PDP), computers, smartphones and mobile phones, and serves to charge electricity therein or discharge electricity therefrom.

The multilayer ceramic capacitor may be used as a component in various electronic devices due to having a small size, ensuring high capacitance and being easily mounted. With the miniaturization and implementation of high output power of various electronic devices such as computers and mobile devices, demand for miniaturization and high capacitance of multilayer ceramic capacitors has also been increasing.

Additionally, as an application to automotive electrical components increases, high reliability in various environments is required.

Multilayer ceramic capacitors are generally mounted on a substrate and used. Accordingly, mounting reliability is one very important factor in multilayer ceramic capacitor products. In order to secure mounting reliability, the mounting strength must be improved.

Additionally, the breakage of the body of the multilayer ceramic capacitor may cause various reliability degradations, such as reduced moisture reliability and reduced insulation resistance.

### SUMMARY

An aspect of the present disclosure is to provide a multilayer electronic component having excellent reliability.

An aspect of the present disclosure is to provide a multilayer electronic component having improved mounting reliability.

An aspect of the present disclosure is to provide a multilayer electronic component having reduced breakage of the body.

However, the aspects of the present disclosure are not limited to the above-described contents, and may be more easily understood in the process of describing specific embodiments of the present disclosure.

A multilayer electronic component according to an example embodiment of the present disclosure may include: a capacitance formation portion including a dielectric layer and first and second internal electrodes alternately arranged in a first direction with the dielectric layer interposed therebetween, a first cover portion disposed above the capacitance formation portion in the first direction, and a second cover portion disposed below the capacitance formation portion in the first direction; a body including first and second surfaces opposing each other in the first direction, third and fourth surfaces connected to the first and second surfaces and opposing each other in a second direction, and fifth and sixth surfaces connected to the first to fourth surfaces and opposing each other in the third direction; and first and second external electrodes disposed on the body and respectively connected to the first and second internal electrodes, wherein corners of the body in first and second directional cross-sections of the body may have a rounded shape, and when a radius of curvature of the corner disposed in the first cover portion is defined as Ru, and a radius of curvature of a corner disposed in the second cover portion is defined as Rd, Rd < Ru may be satisfied, and when an average size of dielectric crystal grains included in the first cover portion is defined as Gs1 and an average size of dielectric crystal grains included in the second cover portion is defined as Gs2, Gs2 < Gs1 may be satisfied.

A multilayer electronic component according to an embodiment of the present disclosure may include a capacitance forming portion including a dielectric layer and first and second internal electrodes alternately stacked in a thickness direction with the dielectric layer interposed therebetween, a first cover portion comprising a first dielectric material covering an upper surface of the capacitance forming portion in the thickness direction, having an average thickness tc1 and corners with a radius of curvature Ru, and a second cover portion comprising a second dielectric material covering a lower surface of the capacitance forming portion in the thickness direction, having corners with a radius of curvature Rd and an average thickness tc2.

One of the various effects of the present disclosure is to improve the reliability of a multilayer electronic component.

One of the various effects of the present disclosure is to improve mounting reliability of a multilayer electronic component.

One of the various effects of the present disclosure is to prevent a body of a multilayer electronic component from being broken.

However, advantages and effects of the present application are not limited to the foregoing content and may be more easily understood in the process of describing a specific example embodiment of the present disclosure.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective view schematically illustrating a multilayer electronic component according to an example embodiment of the present disclosure;
FIG. 2 is a schematic cross-sectional view taken along line I-I' of FIG. 1;
FIG. 3 is a schematic cross-sectional view taken along line II-II' of FIG. 1;
FIG. 4 is an enlarged view of region K1 of FIG. 2;
FIG. 5 is an enlarged view of a region K2 of FIG. 2;
FIG. 6 is an enlarged view of a region K3 of FIG. 2;
FIG. 7 is an enlarged view of a region K4 of FIG. 2;
FIG. 8 is an enlarged view of a region K5 of FIG. 2;
FIG. 9 is an enlarged view of a region K6 of FIG. 3; and
FIG. 10 is an enlarged view of a region K7 of FIG. 3.

### DETAILED DESCRIPTION

Hereinafter, example embodiments of the present disclosure will be described with reference to specific example embodiments and the attached drawings. The example embodiments of the present disclosure may, however, be exemplified in many different forms and should not be construed as being limited to the specific embodiments set forth herein. The example embodiments disclosed herein are provided for those skilled in the art to better explain the present disclosure. Therefore, in the drawings, the shapes and dimensions of elements may be exaggerated for clarity, and the same reference numerals will be used throughout to designate the same or like elements.

In addition, in order to clearly describe the present disclosure in the drawings, contents unrelated to the description are omitted, and since sizes and thicknesses of each component illustrated in the drawings are arbitrarily illustrated for convenience of description, the present disclosure is not limited thereto. In addition, components with the same function within the same range of ideas are described using the same reference numerals. Throughout the specification, when a certain portion "includes" or "comprises" a certain component, this indicates that other components are not excluded and may be further included unless otherwise noted.

In the drawings, a first direction may be defined as a thickness T direction, a second direction may be defined as a length L direction, and a third direction may be defined as a width W direction.

### Multilayer Electronic Component

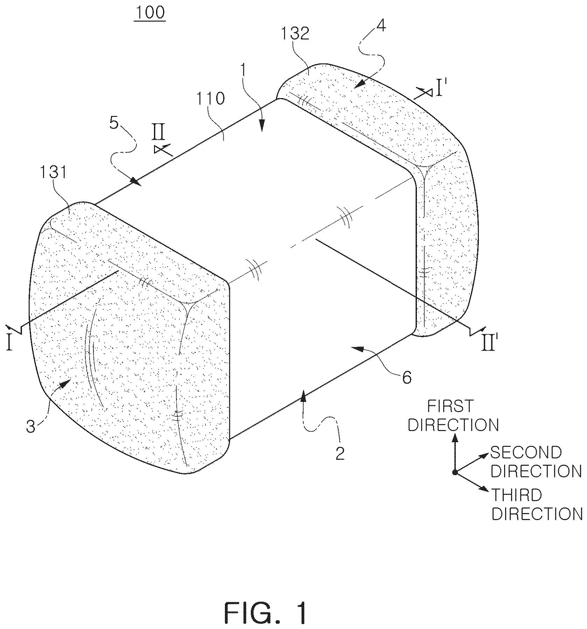

FIG. 1 is a perspective view schematically illustrating a multilayer electronic component according to an example embodiment of the present disclosure.

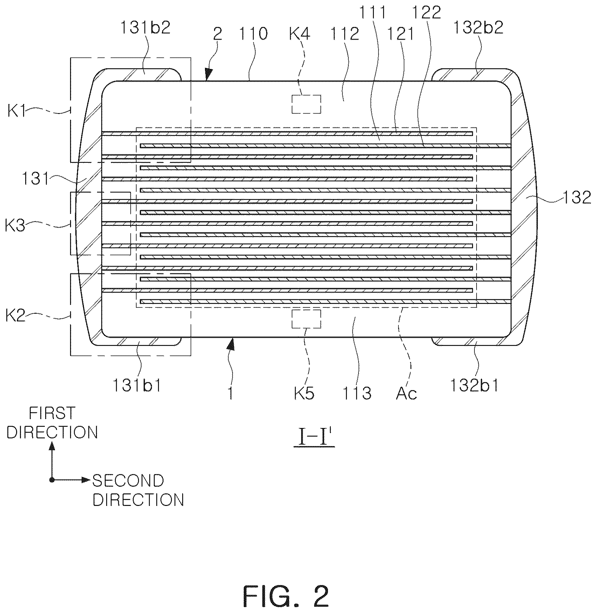

FIG. 2 is a schematic cross-sectional view taken along line I-I' of FIG. 1.

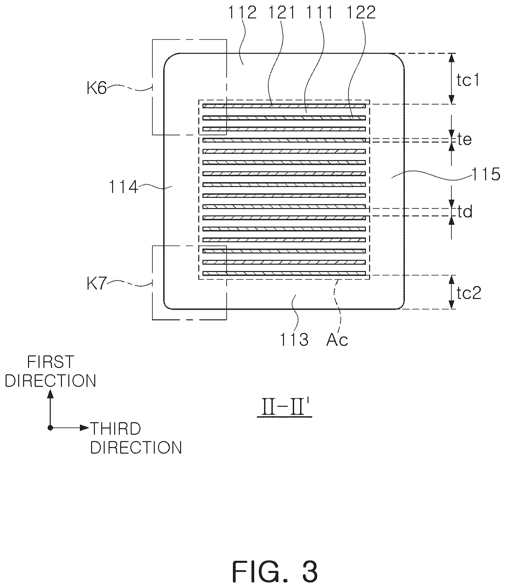

FIG. 3 is a schematic cross-sectional view taken along line II-II' of FIG. 1.

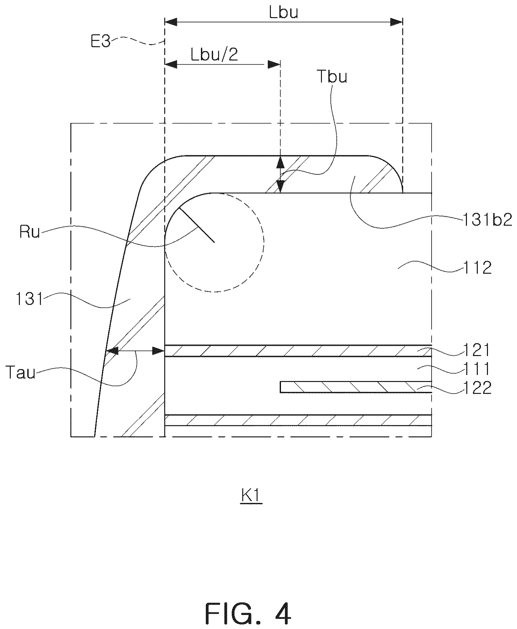

FIG. 4 is an enlarged view of region K1 of FIG. 2

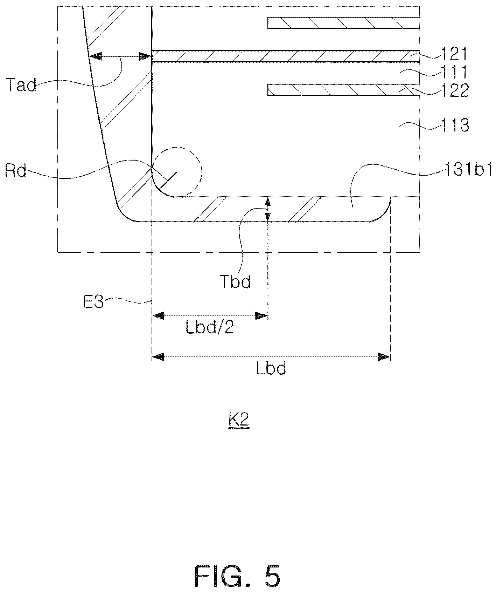

FIG. 5 is an enlarged view of a region K2 of FIG. 2.

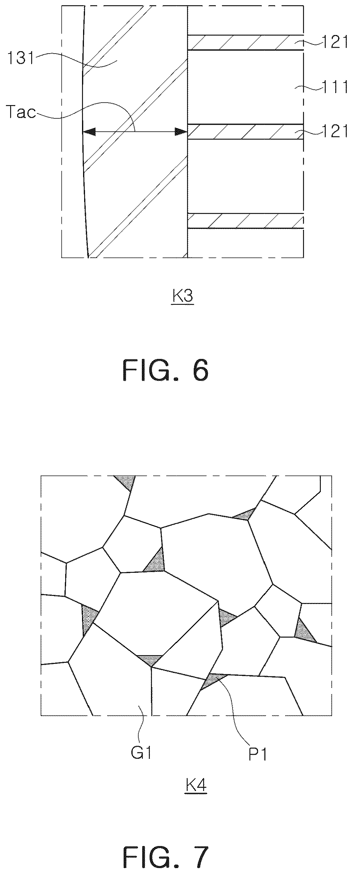

FIG. 6 is an enlarged view of a region K3 of FIG. 2.

FIG. 7 is an enlarged view of a region K4 of FIG. 2.

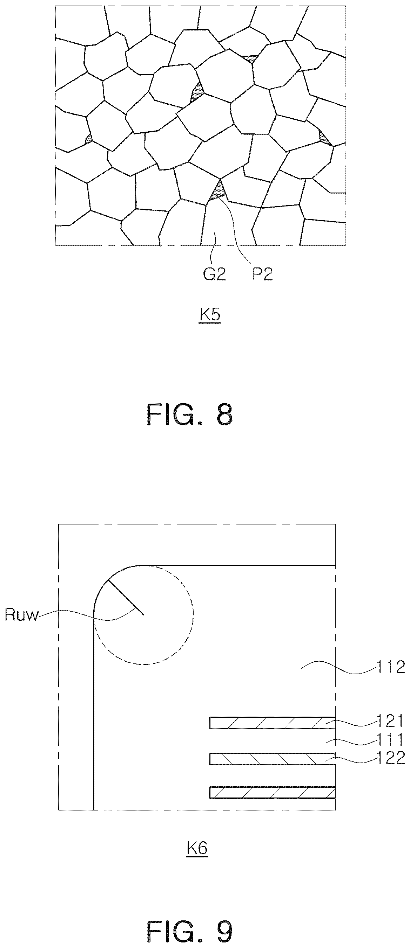

FIG. 8 is an enlarged view of a region K5 of FIG. 2.

FIG. 9 is an enlarged view of a region K6 of FIG. 3.

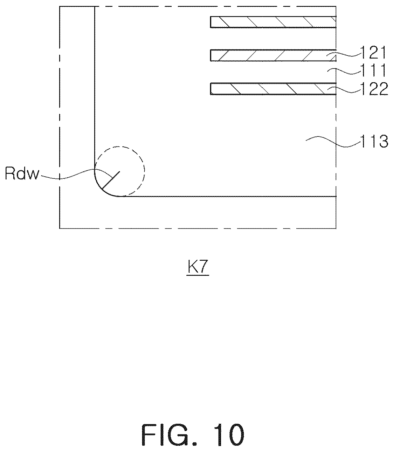

FIG. 10 is an enlarged view of a region K7 of FIG. 3.

Hereinafter, a multilayer electronic component 100 according to an example embodiment of the present disclosure will be described in detail with reference to FIGS. 1 to 10. Additionally, a multilayer ceramic capacitor (hereinafter referred to as 'MLCC') is described as an example of a multilayer electronic component, but the present disclosure is not limited thereto, and the multilayer electronic component of the present disclosure may also be applied to various multilayer electronic components using ceramic materials, such as inductors, piezoelectric elements, varistors, or thermistors.

According to an example embodiment of the present disclosure, a multilayer electronic component 100 may include: a capacitance formation portion Ac including a dielectric layer 111 and first and second internal electrodes 121 and 122 alternately arranged in a first direction with the dielectric layer interposed therebetween, and a first cover portion 112 disposed above the capacitance formation portion in the first direction, and a second cover portion 113 disposed below the capacitance formation portion in the first direction, a body 110 including first and second surfaces 1 and 2 opposing each other in the first direction, third and fourth surfaces 3 and 4 connected to the first and second surfaces and opposing each other in a second direction and fifth and sixth surfaces 5 and 6 connected to the first to fourth surfaces and opposing each other in the third direction; and first and second external electrodes 131 and 132 disposed on the body and connected to the first and second internal electrodes, respectively, and corners of the body in first and second directional cross-sections of the body may have a rounded shape, and when a radius of curvature of the corner disposed in the first cover portion is defined as Ru and a radius of curvature of the corner disposed in the second cover portion is defined as Rd, Rd < Ru may be satisfied, and when an average size of the dielectric crystal grains included in the first cover portion is defined as Gs1 and an average size of the dielectric crystal grains included in the second cover portion is defined as Gs2, Gs2 < Gs1 may be satisfied.

According to an example embodiment of the present disclosure, the corner of the body 110 may have a rounded shape, a radius of curvature Ru of the corner disposed in the first cover portion 112 may be made larger than a radius of curvature Rd of the corner disposed in the second cover portion 113, and an average size Gs1 of the dielectric crystal grains included in the first cover portion 112 may be made larger than an average size Gs2 of the dielectric crystal grains included in the second cover portion 113, thereby improving the mounting reliability and suppressing the breakage of the body.

Hereinafter, each component included in the multilayer electronic component 100 according to an example embodiment of the present disclosure will be described.

The body 110 may have dielectric layers 111 and internal electrodes 121 and 122 alternately stacked.

There is no particular limitation on the specific shape of the body 110, but as illustrated, the body 110 may have a hexahedral shape or a shape similar thereto. Due to contraction of ceramic powder particles included in the body 110 during a sintering process, the body 110 may not have a hexahedral shape with entirely straight lines. Alternatively, the corners connecting each surface of the body 110 may be rounded by performing a separate process, so that the corners connecting the first surface and the third to sixth surfaces and/or the corners connecting the second surface and the third to sixth surfaces may have a rounded shape.

The body 110 may have first and second surfaces 1 and 2 opposing each other in the first direction, third and fourth surfaces 3 and 4 connected to the first and second surfaces 1 and 2 and opposing each other in the second direction, and fifth and sixth surfaces 5 and 6 connected to the first and second surfaces 1 and 2 and connected to the third and fourth surfaces 3 and 4 and opposing each other in the third direction. The first surface 1 may be a mounting surface disposed to oppose the substrate when mounted on the substrate.

In a state in which a plurality of dielectric layers 111 included in the body 110 are sintered, boundaries between adjacent dielectric layers 111 may be integrated so as to be difficult to identify without using a scanning electron microscope (SEM). The number of dielectric layers does not need to be specifically limited, and may be determined by considering the size of the multilayer electronic component. For example, the body may be formed by stacking 400 or more dielectric layers.

The dielectric layer 111 may be formed by producing a ceramic slurry containing ceramic powder particles, an organic solvent and a binder, applying and drying the slurry on a carrier film to prepare a ceramic green sheet, and then sintering the ceramic green sheet. The ceramic powder particles are not particularly limited as long as sufficient electrostatic capacitance may be obtained therewith, and for example, barium titanate-based (BaTiO₃) powder particles, CaZrO₃-based paraelectric powder particles, and the like, may be used as the ceramic powder particles. For more specific examples, the barium titanate (BaTiO₃) powder particles may be one or more of BaTiO₃, (Ba₁₋ₓCaₓ)TiO₃ (0<x<1), Ba (Ti_{1-y}Ca_{y})O₃ (0<y<1), (Ba₁₋ₓCaₓ)(Ti_{1-y}Zr_{y})O₃ (0<x<1, 0<y<1) and Ba(Ti_{1-y}Zr_{y})O₃ (0<y<1), and the CaZrO₃-based paraelectric powder particles may be (Ca₁₋ₓSrₓ)(Zr_{1-y}Ti_{y})O₃ (0<x<1, 0<y<1) .

Therefore, the dielectric layer 111 may include one or more of BaTiO₃, (Ba₁₋ₓCaₓ)TiO₃ (0<x<1), Ba(Ti_{1-y}Ca_{y})O₃ (0<y<1), (Ba₁₋ₓCaₓ)(Ti_{1-y}Zr_{y})O₃ (0<x<1, 0<y<1), Ba(Ti_{1-y}Zr_{y})O₃ (0<y<1) and (Ca₁₋ₓSrₓ)(Zr_{1-y}Ti_{y})O₃ (0<x<1, 0<y<1).

The body 110 may include the capacitance formation portion Ac disposed in the body 110 and including a first internal electrode 121 and a second internal electrode 122 disposed so as to face each other with the dielectric layer 111 interposed therebetween to form capacitance, and cover portions 112 and 113 formed on upper and lower portions of the capacitance formation portion Ac in the first direction.

Additionally, the capacitance formation portion Ac is a portion contributing to the capacitance formation of the capacitor, and may be formed by repeatedly stacking a plurality of first and second internal electrodes 121 and 122 with the dielectric layer 111 interposed therebetween.

The cover portions 112 and 113 may include a first cover portion 112 disposed above the capacitance formation portion Ac in the first direction and a second cover portion 113 disposed below the capacitance formation portion Ac in the first direction. The first cover portion 112 may be referred to as an upper cover portion, and the second cover portion 113 may be referred to as a lower cover portion.

The first upper cover portion 112 and the second cover portion 113 may be formed by stacking a single dielectric layer or two or more dielectric layers on upper and lower surfaces of the capacitance formation portion Ac in a thickness direction, respectively, and may basically serve to prevent damage to the internal electrodes due to physical or chemical stress.

The first cover portion 112 and the second cover portion 113 may not include an internal electrode. Additionally, the first cover portion 112 and the second cover portion 113 may include the same material as the dielectric layer 111. That is, the first cover portion 112 and the second cover portion 113 may include a ceramic material, and may include, for example, a barium titanate (BaTiO₃) ceramic material.

Referring to FIGS. 4 and 5, in first and second directional cross-sections of the body 110, corners of the body 110 may have a rounded shape, and when a radius of curvature of the corner disposed in the first cover portion 112 is defined as Ru, and a radius of curvature of the corner disposed in the second cover portion 113 is defined as Rd, Rd < Ru may be satisfied. The radius of the curvature Ru of the corner disposed in the first cover portion 112 may be made larger than the radius of the curvature Rd of the corner disposed in the second cover portion 113, thereby suppressing the breakage of the body and improving the mounting reliability thereof.

Since the radius of curvature Rd of the corner disposed in the second cover portion 113 is small, a distance between the board and the body may be minimized when mounted on the board, thereby improving the mounting strength. In general, as the radius of curvature of the corner of the body increases, a thickness of the external electrode becomes thicker, and conversely, as the radius of curvature of the corner of the body decrease, the thickness of the external electrode may become thinner. Accordingly, since the radius of the curvature Rd of the corner disposed in the second cover portion 113 is small, a thickness of a first-first band part 131b1 becomes thinner, thereby minimizing the distance between the board and the body when mounted on the board and improving the mounting strength.

However, with an increase in the radius of curvature of the corner of the body, the breakage of the body may be easily suppressed, and conversely, with a decrease in the radius of curvature of the corner of the body, it may be difficult to suppress the breakage of the body. Accordingly, when the radius of the curvature Rd of the corner disposed in the second cover portion 113 is small, the mounting strength may be improved, but there may be a risk of breakage of the body. However, according to an example embodiment of the present disclosure, when an average size of a dielectric crystal grains G1 included in the first cover portion 112 is defined as Gs1, and an average size of the dielectric crystal grains G2 included in the second cover portion 113 is defined as Gs2, Gs2 < Gs1 may be satisfied, and accordingly, even if the radius of the curvature Rd of the corner disposed in the second cover portion 113 is small, the breakage of the body may be suppressed because the density of the second cover portion 113 is high. Accordingly, according to an example embodiment of the present disclosure, it may be possible to secure mounting reliability while suppressing the breakage of the body.

Additionally, when the rounded shape of the corner of the body 110 is formed by a polishing process, as Gs2 < Gs1 is satisfied, the density of the first cover portion 112 may be lower than that of the second cover portion 113, and thus, even if the same polishing process is applied, the radius of the curvature Ru of the corner disposed in the first cover portion 112 may be larger than the radius of curvature Rd of the corner disposed in the second cover portion 113.

In an example embodiment, Ru and Rd may satisfy 0.70 < Rd/Ru < 1.00. Accordingly, it may be possible to secure the mounting reliability while suppressing the breakage of the body more easily. When Rd/Ru is 0.70 or less, it may be difficult to simultaneously secure the effect of suppressing the breakage of the body and the mounting reliability.

More preferably, Ru and Rd may satisfy 0.70 < Rd/Ru < 0.95, but the present disclosure is not limited thereto.

Meanwhile, there is no need to specifically limit respective values of Ru and Rd, and the values thereof may be appropriately selected in consideration of the size of the multilayer electronic component. For example, in the case of a multilayer electronic component of size 1005 (length: 1.00 mm, width: 0.5 mm), Ru may be 15 mm or more and 30 mm or less, and Rd may be 14 mm or more and less than 30 mm.

In an example embodiment, Gs1 and Gs2 may satisfy 0.80 < Gs2/Gs1 < 1.00. Accordingly, it is possible to more easily suppress the breakage of body while securing the mounting reliability.

When Gs2/Gs1 is 0.80 or less, it may be difficult to simultaneously secure an effect of suppressing the breakage of the body and the mounting reliability.

More preferably, Gs1 and Gs2 may satisfy 0.80 < Gs2/Gs1 < 0.95, but the present disclosure is not limited thereto.

Meanwhile, there is no need to specifically limit respective values of Gs1 and Gs2, and the values thereof may be appropriately selected in consideration of the size of the multilayer electronic component. For example, in the case of a multilayer electronic component of size 1005 (length: 1.00 mm, width: 0.5 mm), Gs1 may be 100 nm or more and 500 nm or less, and Gs2 may be 90 nm or more and 450 nm or less.

Meanwhile, a method of controlling the radius of the curvature Ru of the corner disposed in the first cover portion 112 to be larger than the radius of the curvature Rd of the corner disposed in the second cover portion 113, and controlling the average size Gs1 of the dielectric crystal grains included in the first cover portion 112 to be larger than the average size Gs2 of the dielectric crystal grains included in the second cover portion 113 does not need to be particularly limited. For example, the composition of a ceramic green sheet for forming the first cover portion 112 and a ceramic green sheet for forming the second cover portion 113 may vary by changing a binder content, type of ceramic powder particles and the like, so that a density of the second cover portion 113 may be made higher than a density of the first cover portion 112. Additionally, the first cover portion 112 and the second cover portion 113 may be formed using ceramic green sheets having the same composition. For example, after stacking the second cover portion 113 by stacking one or more ceramic green sheets, a pressing process may be performed once before stacking a ceramic green sheet on which an internal electrode pattern is printed, and then, the ceramic green sheet on which the internal electrode pattern is printed and a ceramic green sheet for forming the first cover portion 112 may be formed and the pressing process may be performed again, so that the second cover portion 113 may be controlled to have a higher density than that of the first cover portion 112 as the pressing process is performed twice. Due to the difference in density between the first and second cover portions, even if the same conditions of the polishing process are performed on the first and second cover portions in the polishing process, the radius of curvature of the rounded shape disposed on each of the first and second cover portions may be controlled differently.

In an example embodiment, when an average thickness of the first cover portion 112 is defined as tc1, and an average thickness of the second cover portion 113 is defined as tc2, tc2 < tc1 may be satisfied. By satisfying tc2 < tc1, Rd < Ru may be easily satisfied.

In this case, tc1 and tc2 may satisfy 0.50 < tc2/tc1 < 1.00. When tc2/tc1 is 0.50 or less, the role of preventing damage to the internal electrode by the cover portions 112 and 113 may be insufficient, or there may be a concern in that the capacitance per unit volume of the multilayer electronic component may be reduced.

Meanwhile, there is no need to specifically limit respective values of tc1 and tc2, and respective values thereof may be appropriately selected in consideration of the size of the multilayer electronic component. For example, in the case of a multilayer electronic component of size 1005 (length: 1.00 mm, width: 0.5 mm), tc1 may be 20 um or more and 70 um or less, and tc2 may be 15 um or more and 60 um or less.

Thicknesses of the cover portions 112 and 113 may refer to first directional sizes, respectively. The average thickness of the first cover portion 112 may be an average value of the first directional sizes of the first cover portion 112 measured at five points equally spaced apart from each other from an upper portion of the capacitance formation portion Ac, and the average thickness of the second cover portion 113 may be an average value of the first directional sizes of the second cover portion 113 measured five points equally spaced apart from each other from a lower portion of the capacitance formation portion Ac.

In an example embodiment, the first external electrode 131 may include a first-first band portion 131b1 disposed on the third surface 3 and extending to a portion of the first surface 1 and a first-second band portion 131b2 extending to a portion of the second surface 2, and the second external electrode 132 may include a second-first band portion 132b1 disposed on the fourth surface 4 and extending to a portion of the first surface 1 and a second-second band portion 132b2 extending to a portion of the second surface 2.

In this case, an average thickness of the first-first band portion 131b1 may be thinner than an average thickness of the first-second band portion 131b2, and an average thickness of the second-first band portion 132b1 may be thinner than an average thickness of the second-second band portion 132b2. Accordingly, when mounting the multilayer electronic component 100 on the substrate, a distance between the substrate and the body may be minimized to improve the mounting strength.

Additionally, when a thickness of the first-first band portion measured in a central point from an extension line E3 of the third surface to an end of the first-first band portion in the first and second directional cross-sections of the body 110 is defined as Tbd, and a thickness of the first-second band portion measured in a central point from the extension line E3 of the third surface to an end of the first-second band portion is defined as Tbu, Tbd < Tbu may be satisfied.

Referring to FIG. 5, when a distance from the extension line E3 of the third surface to the end of the first-first band portion is defined as Lbd, the thickness of the first-first band portion measured at a point spaced apart by Lbd/2 from the extension line E3 of the third surface may be defined as Tbd. Additionally, referring to FIG. 4, when a distance from the extension line E3 of the third surface to the end of the first-second band portion is defined as Lbu, the thickness of the first-second band portion measured at a point spaced apart by Lbu/2 from the extension line E3 of the third surface may be defined as Tbu. In this case, Tbu and Tbd may be measured in the first and second directional cross-sections cut from a central portion of the body in the third direction.

In this case, the Tbd and the Tbu may satisfy 0.5 < Tbd/Tbu < 1.0. Accordingly, it may possible to more easily suppress the breakage of the body while securing the mounting reliability.

Meanwhile, there is no need to specifically limit respective values of Tbd and Tbu, and the values thereof may be appropriately selected in consideration of the size of the multilayer electronic component. For example, in the case of a multilayer electronic component of size 1005 (length: 1.00 mm, width: 0.5 mm), Tbd may be 17 um or more and 35 um or less, and Tbu may be 15 um or more and 30 um or less.

Referring to FIGS. 4 to 6, when a thickness of the first external electrode 131 measured from the first internal electrode 121 disposed in an uppermost portion in the first direction is defined as Tau, a thickness of the first external electrode 131 measured on the first internal electrode 121 disposed in a lowermost portion in the first direction is defined as Tad, and the thickness of the first external electrode measured in the central portion of the body in the first direction is defined as Tac, Tad < Tau < Tac may be satisfied.

As the external electrodes 131 and 132 are formed by dipping into a conductive paste, a thickness of the external electrodes 131 and 132 in the central portion of the body 110 may be thicker than the thickness of the external electrodes 131 and 132 in an outer periphery of the body 110, and Tad < Tau may be satisfied by satisfying Rd <Ru.

In this case, the band portion of the external electrode may be thinner than the thickness of the external electrode in the outer periphery of the body, and Tbd < Tbu < Tad < Tau < Tac may be satisfied.

Meanwhile, the corners of the body may have a rounded shape not only in the first and second directional cross-sections of the body, but also in first and third directional cross-sections of the body. Referring to FIGS. 9 and 10, when a radius of curvature of the corner disposed in the first cover portion in the first and third directional cross-sections of the body is defined as Ruw, and a radius of curvature of the corner disposed in the second cover portion is defined as Rdw, Ruw > Rdw may be satisfied.

Additionally, referring to FIGS. 2 and 3, although the first internal electrode or the second internal electrode is disposed in a second directional end of the body, since the first and second internal electrodes are not disposed in a third directional end of the body, Ru, Rd, Ruw and Rud may satisfy Ruw > Ru > Rdw > Rd by a step portion due to the thickness of the internal electrode.

Referring to FIGS. 7 and 8, the first cover portion 112 may include a plurality of crystal grains G1 and pores P1, and the second cover portion 113 may include a plurality of crystal grains G2 and pores P2.

When a porosity of the first cover portion 112 is defined as Ps1 and a porosity of the second cover portion 113 is defined as Ps2, Ps2 < Ps1 may be satisfied. Since the porosity may also have a great influence on the density of the first and second cover portions, the density of the first cover portion may be made lower than that of the second cover portion by satisfying Ps2 < Ps1, so that the breakage of the body may be easily suppressed while securing the mounting reliability.

In an example embodiment, Ps1 and Ps2 may satisfy 0.7 ≤ Ps2/Ps1 < 1.0. When Ps2/Ps1 is less than 0.7, since sufficient strength of the second cover portion 113 is not secured, the radius of curvature during polishing is likely to be similar to that of the first cover portion 112, and thus it may be difficult to secure sufficient mounting strength.

The average grain size and a porosity of the first and second cover portions 112 and 113 may be measured by analyzing an image scanned at 50k magnification using a SEM made by ZEISS from a cross-section cut from a third directional central portion of the body in the first and second directions. In this case, images of a first directional central portion and a second directional central portion of each of the first and second cover portions 112 and 113 may be scanned using the SEM.

A Feret diameter of the crystal grains may be measured using Zootos, a grain size measurement software, from the scanned images, thus obtaining average sizes of respective crystal grains G1 and G2. Additionally, since dielectric crystal grains G1 and G2 and the pores P1 and P2 have distinct differences in brightness, a ratio of an area occupied by the pores P1 to a total area (including pores) of the first cover portion observed in the scanned images of the SEM using an image analysis program and a ratio of an area occupied by the pores P2 among the total area (including pores) of the second cover portion observed in the scanned images of the SEM may be measured to obtain respective porosity thereof.

Additionally, margin portions 114 and 115 may be disposed on side surfaces of the capacitance formation portion Ac.

The margin portions 114 and 115 may include a first margin portion 114 disposed on the fifth surface 5 of the body 110 and a second margin portion 115 disposed on the sixth surface 6. That is, the margin portions 114 and 115 may be disposed on both end surfaces of a ceramic body 110 in a width direction.

As illustrated in FIG. 3, the margin portions 114 and 115 may refer to a region between both ends of the first and second internal electrodes 121 and 122 and a boundary surface of the body 110 in a cross-section obtained by cutting the body 110 cut in a width-thickness (W-T) direction.

The margin portions 114 and 115 may basically serve to prevent damage to the internal electrodes due to physical or chemical stress.

The margin portions 114 and 115 may be formed by forming the internal electrode by applying a conductive paste except for a portion in which the margin portion is to be formed on the ceramic green sheet.

Meanwhile, a width of the margin portions 114 and 115 does not need to be particularly limited. However, in order to more easily achieve miniaturization and high capacitance of the multilayer electronic component, an average width of the margin portions 114 and 115 may be 15 um or less.

An average width of the margin portions 114 and 115 may refer to a third-direction average size of a region in which the internal electrodes 121 and 122 are spaced apart from the fifth surface and a third-direction average size of a region in which the internal electrodes 121 and 122 is spaced apart from the sixth surface, and may be an average value of the third directional sizes of the margin portions 114 and 115 measured at five points spaced apart from each other by equal intervals in the first direction on the side surface of the capacitance formation portion Ac.

Accordingly, in an example embodiment, each of the third-direction average sizes of the regions in which the internal electrodes 121 and 122 is spaced apart from the fifth and sixth surfaces may be 15 um or less.

The internal electrodes 121 and 122 may include first and second internal electrodes 121 and 122. The first and second internal electrodes 121 and 122 may be alternately arranged to face each other with the dielectric layer 111 included in the body 110 interposed therebetween, and may be exposed to the third and fourth surfaces 3 and 4 of the body 110, respectively.

The first internal electrode 121 may be spaced apart from the fourth surface 4 and may be exposed through the third surface 3, and the second internal electrode 122 may be spaced apart from the third surface 3 and may be exposed through the fourth surface 4. The first external electrode 131 may be disposed on the third surface 3 of the body and may be connected to the first internal electrode 121, and the second external electrode 132 may be disposed on the fourth surface 4 of the body and may be connected to the second internal electrode 122.

That is, the first internal electrode 121 may be connected to the first external electrode 131 without being connected to the second external electrode 132, and the second internal electrode 122 may be connected to the second external electrode 132 without being connected to the first external electrode 131. Accordingly, the first internal electrode 121 may be formed to be spaced apart by a certain distance from the fourth surface 4, and the second internal electrode 122 may be formed to be spaced apart from the third surface 3 by a certain distance. Additionally, the first and second internal electrodes 121 and 122 may be spaced apart from the fifth and sixth surfaces of the body 110.

A conductive metal included in the internal electrodes 121 and 122 may be one or more of Ni, Cu, Pd, Ag, Au, Pt, In, Sn, Al, Ti, and alloys thereof, and the present disclosure is not limited thereto.

An average thickness td of the dielectric layer 111 does not need to be specifically limited, but may be, for example, 0.1 um to 10 um. An average thickness te of the internal electrodes 121 and 122 does not need to be specifically limited, but may be, for example, 0.05 um to 3.0 um. Additionally, the average thickness td of the dielectric layer 111 and the average thickness te of the internal electrodes 121 and 122 may be arbitrarily set according to the desired characteristics or purposes. For example, in order to achieve miniaturization and high capacitance, for high-voltage electric field electronic components, the average thickness td of the dielectric layer 111 may be less than 2.8 um, and the average thickness te of the internal electrodes 121 and 122 may be less than 1 um. In addition, in order to achieve miniaturization and high capacitance, for small IT electronic components, the average thickness td of the dielectric layer 111 may be 0.4 um or less, and the average thickness te of the internal electrodes 121 and 122 may be 0.4 um or less.

Each of the average thickness td of the dielectric layer 111 and the average thickness te of the internal electrodes 121 and 122 refer to the first direction sizes of the dielectric layer 111 and the internal electrodes 121 and 122. The average thickness td of the dielectric layer 111 and the average thickness te of the internal electrodes 121 and 122 may be measured by scanning first and second directional cross-sections of the body 110 with a scanning electron microscope (SEM) of 10,000X magnification. More specifically, the average thickness td of the dielectric layer 111 may be obtained by measuring the thicknesses thereof at multiple points of one dielectric layer 111, for example, 30 points equally spaced apart from each other in the second direction, and measuring an average value thereof. Additionally, the average thickness te of the internal electrodes 121 and 122 may be obtained by measuring the thicknesses at multiple points of one internal electrode 121 or 122, for example, 30 points equally spaced apart from each other in the second direction, and measuring an average value thereof. The 30 points equally spaced apart from each other may be designated in the capacitance formation portion Ac. Meanwhile, when the average value is measured by extending an average value measurement up to each of 10 dielectric layers 111 and 10 internal electrodes 121 and 122, the average thickness td of the dielectric layer 111 and the average thickness te of the internal electrodes 121 and 122 may be further generalized.

The external electrodes 131 and 132 may be disposed on the third surface 3 and the fourth surface 4 of the body 110.

The external electrodes 131 and 132 may include first and second external electrodes 131 and 132 disposed on the third and fourth surfaces 3 and 4 of the body 110, respectively, and connected to the first and second internal electrodes 121 and 122, respectively.

Referring to FIG. 1, the external electrodes 131 and 132 may be disposed to cover both cross-sections of the side margin portions 114 and 115 in the second direction.

In an example embodiment, the structure in which the multilayer electronic component 100 has two external electrodes 131 and 132 is described, but the number or shape of the external electrodes 131 and 132 may be changed depending on the shape of the internal electrodes 121 and 122 or other purposes.

Meanwhile, the external electrodes 131 and 132 may be formed using any material that has electrical conductivity, such as a metal, and a specific material may be determined in consideration of electrical characteristics, structural stability, and the like, and further, the external electrodes 131 and 132 may have a multilayer structure.

For example, the external electrodes 131 and 132 may include an electrode layer disposed on the body 110 and a plating layer formed on the electrode layer.

For a more specific example of the electrode layer, the electrode layer may be a sintered electrode including a conductive metal and glass, or a resin-based electrode including a conductive metal and a resin.

Additionally, the electrode layer may be in the form in which the sintered electrode and the resin-based electrode are sequentially formed on the body. Additionally, the electrode layer may be formed by transferring a sheet including a conductive metal onto the body, or may be formed by transferring a sheet including the conductive metal onto the sintered electrode.

A material having excellent electrical conductivity may be used as the conductive metal included in the electrode layer, and is not particularly limited. For example, the conductive metal may be one or more of nickel (Ni), copper (Cu), and alloys thereof.

The plating layer serves to improve the mounting characteristics. The type of the plating layer is not particularly limited, and plating layer may be a plating layer including at least one of Ni, Sn, Pd, and alloys thereof, and may be formed of a plurality of layers.

For a more specific example of the plating layer, the plating layer may be a Ni plating layer or a Sn plating layer, may be in a form in which the Ni plating layer and the Sn plating layer are sequentially formed on the electrode layer, and may be in a form in which the Sn plating layer, the Ni plating layer, and the Sn plating layer are sequentially formed. Additionally, the plating layer may include a plurality of Ni plating layers and/or a plurality of Sn plating layers.

The size of the multilayer electronic component 100 does not need to be particularly limited. For example, a length of the multilayer electronic component 100 may be 4.5 mm or less, a thickness of the multilayer electronic component 100 may be 3.2 mm or less, and a width of the multilayer electronic component 100 may be 3.2 mm or less.

Here, the length of the multilayer electronic component 100 may refer to a maximum size of the multilayer electronic component 100 in the second direction, the thickness of the multilayer electronic component 100 may refer to a maximum size of the multilayer electronic component 100 in the first direction, and the width of the multilayer electronic component 100 may refer to a maximum size of the multilayer electronic component 100 in the third direction.

Although the example embodiment of the present disclosure has been described in detail above, the present disclosure is not limited to the above-described embodiments and the accompanying drawings but is defined by the appended claims. Therefore, those of ordinary skill in the art may make various replacements, modifications, or changes without departing from the scope of the present disclosure defined by the appended claims, and these replacements, modifications, or changes should be construed as being included in the scope of the present disclosure.

In addition, the expression 'an example embodiment' used in the present disclosure does not mean the same embodiment, and is provided to emphasize and explain different unique characteristics. However, the embodiments presented above do not preclude being implemented in combination with the features of another embodiment. For example, although items described in a specific embodiment are not described in another embodiment, the items may be understood as a description related to another embodiment unless a description opposite or contradictory to the items is in another embodiment.

In the present disclosure, the terms are merely used to describe a specific embodiment, and are not intended to limit the present disclosure. Singular forms may include plural forms as well unless the context clearly indicates otherwise.

## Claims

1. A multilayer electronic component, comprising:
a capacitance formation portion including a dielectric layer and first and second internal electrodes alternately arranged in a first direction with the dielectric layer interposed therebetween;
a first cover portion disposed above the capacitance formation portion in the first direction;
a second cover portion disposed below the capacitance formation portion in the first direction;
a body including first and second surfaces opposing each other in the first direction, third and fourth surfaces connected to the first and second surfaces and opposing each other in a second direction, and fifth and sixth surfaces connected to the first to fourth surfaces and opposing each other in a third direction; and
first and second external electrodes disposed on the body and respectively connected to the first and second internal electrodes,
wherein corners of the body in first and second directional cross-sections of the body have a rounded shape, and when a radius of curvature of a corner disposed in the first cover portion is defined as Ru, and a radius of curvature of a corner disposed in the second cover portion is defined as Rd, Rd < Ru is satisfied, and
when an average size of dielectric grains included in the first cover portion is defined as Gs1 and an average size of dielectric grains included in the second cover portion is defined as Gs2, Gs2 < Gs1 is satisfied.

2. The multilayer electronic component according to claim 1, wherein Ru and Rd satisfy 0.70 < Rd/Ru < 1.00.

3. The multilayer electronic component according to claim 1, wherein Gs1 and Gs2 satisfy 0.70 < Gs2/Gs1 < 1.00.

4. The multilayer electronic component according to claim 1, wherein when an average thickness of the first cover portion is referred to as tc1 and an average thickness of the second cover portion is referred to as tc2, tc2 < tc1 is satisfied.

5. The multilayer electronic component according to claim 4, wherein tc1 and tc2 satisfy 0.50 < tc2/tc1 < 1.00.

6. The multilayer electronic component according to claim 1, wherein the first external electrode is disposed on the third surface, and includes a first-first band portion extending to a portion of the first surface and a first-second band portion extending to a portion of the second surface, and
the second external electrode is disposed on the fourth surface, and includes a second-first band portion extending to a portion of the first surface and a second-second band portion extending to a portion of the second surface.

7. The multilayer electronic component according to claim 6, wherein an average thickness of the first-first band portion is thinner than an average thickness of the first-second band portion, and
an average thickness of the second-first band portion is thinner than an average thickness of the second-second band portion.

8. The multilayer electronic component according to claim 6, wherein when a thickness of the first-first band portion measured in a central point from an extension line of the third surface to an end of the first-first band portion in the first and second directional cross-sections of the body is defined as Tbd, and a thickness of the first-second band portion measured in a central point from the extension line of the third surface to an end of the first-second band portion is defined as Tbu, Tbd < Tbu is satisfied.

9. The multilayer electronic component according to claim 8, wherein Tbd and Tbu satisfy 0.5 < Tbd/Tbu < 1.0.

10. The multilayer electronic component according to claim 1, wherein when a thickness of the first external electrode measured from the first internal electrode disposed in an uppermost portion in the first direction is defined as Tau, a thickness of the first external electrode measured from the first internal electrode disposed in a lowermost portion in the first direction is defined as Tad, and a thickness of the first external electrode measured from a central portion of the body in the first direction is defined as Tac, Tad < Tau < Tac is satisfied.

11. The multilayer electronic component according to claim 8, wherein when a thickness of the first external electrode measured from the first internal electrode disposed in an uppermost portion in the first direction is referred to as Tau, a thickness of the first external electrode measured from the first internal electrode disposed in a lowermost portion in the first direction is defined as Tad, and a thickness of the first external electrode measured from a central portion of the body in the first direction is defined as Tac, Tbd < Tbu < Tad < Tau < Tac is satisfied.

12. The multilayer electronic component according to claim 1, wherein in first and third directional cross-sections of the body, corners of the body have a rounded shape, and when a radius of curvature of the corner disposed in the first cover portion is defined as Ruw, and a radius of curvature of the corner disposed in the second cover portion is defined as Rdw, Ruw > Rdw is satisfied.

13. The multilayer electronic component according to claim 12, wherein Ru, Rd, Ruw and Rdw satisfy Ruw > Ru > Rdw > Rd.

14. The multilayer electronic component according to claim 1, wherein when a porosity of the first cover portion is defined as Ps1 and a porosity of the second cover portion is defined as Ps2, Ps2 < Ps1 is satisfied.

15. The multilayer electronic component according to claim 14, wherein Ps1 and Ps2 satisfy 0.7 ≤ Ps2/Ps1 < 1.0.
